# EUROPÄISCHE PATENTANMELDUNG

(11) **EP 4 243 251 A1**
(43) Veröffentlichungstag der Anmeldung: **13.09.2023**
(21) Anmeldenummer: 22161690.7
(22) Anmeldetag: 11.03.2022
(51) Int. Cl.: H02K 3/47, H02K 5/22, H02K 9/193, H02K 11/33, H02K 29/08

(54) **ELEKTRONISCH KOMMUTIERTER ELEKTROMOTOR MIT FLÜSSIGKEITSKÜHLUNG**

(71) Anmelder: maxon international ag, 6072 Sachseln (CH)
(72) Erfinder: Teimel, Arnold, 6074 Giswil (CH)
(74) Vertreter: Grünecker Patent- und Rechtsanwälte PartG mbB

(57) **Zusammenfassung**

Ein elektronisch kommutierten Elektromotor (1) mit einem flüssigkeitsgekühlten Stator (3) mit einer eisenlosen hohlzylindrischen Statorwicklung (6) und einem Kühlmittelkreislauf (13,14,16,17) zum Durchleiten eines Kühlmittels durch den Elektromotor, einem konzentrisch zum Stator drehbar angeordneten Rotor (2), einem den Stator (3) und den Rotor (2) aufnehmenden Motorgehäuse (4), einem Abschlussdeckel (18) und mindestens einer elektrischen Anschlussleitung (19) zum elektrischen Anschluss der Statorwicklung (6). Dabei umfasst der Anschlussdeckel (18) eine Anschlussbaugruppe (5) für diesen elektronisch kommutierten Elektromotor (1). Die Anschlussbaugruppe (5) umfasst mindestens ein Steckverbindungsmittel (20,27) für die elektrische Kontaktierung der elektrischen Anschlussleitung (19) des Elektromotors mit einem entsprechenden Steckverbindungsteil (21) der Statorwicklung (6) des Stators. Ausserdem umfasst die Anschlussbaugruppe (5) bzw. Abschlussdeckel (18) Dichtungen (23,24,35), um Eindringen oder Auslaufen von Flüssigkeiten an diesem axialen Ende des Motorgehäuses (4) zu verhindern.

## Beschreibung

Die vorliegende Erfindung betrifft einen elektronisch kommutierten Elektromotor mit einem flüssigkeitsgekühlten Stator mit einer eisenlosen hohlzylindrischen Statorwicklung und einem Kühlmittelkreislauf zum Durchleiten eines Kühlmittels durch den Elektromotor, einem konzentrisch zum Stator drehbar angeordneten Rotor, einem den Stator und den Rotor aufnehmenden Motorgehäuse, einem Abschlussdeckel und mindestens einer elektrischen Anschlussleitung zum elektrischen Anschluss der Statorwicklung. Darüber hinaus betrifft die Erfindung eine Anschlussbaugruppe für einen solchen elektronisch kommutierten Elektromotor.

Elektromotoren mit einem flüssigkeitsgekühlten Stator sind in der Technik bekannt und werden in verschiedenen Einsatzbereichen genutzt, bei denen eine ausreichende Kühlung der durch die Verlustleistung des Elektromotors entstehenden Abwärme nicht gewährleistet ist. Derartige flüssigkeitsgekühlte Elektromotoren werden sowohl in der Luftfahrt, der Fahrzeugtechnik und der Klimatechnik als auch in der Raumfahrt, Rohstoffförderung und Kraftwerkstechnik eingesetzt.

Ein gattungsgemäßer flüssigkeitsgekühlter Elektromotor ist beispielsweise aus der US 6 489 697 B1 bekannt. Dieser Elektromotor weist eine hohlzylindrische Statorwicklung auf, die von einem weichmagnetischen Rückschluss umschlossen ist, sowie einen konzentrisch zum Stator drehbar angeordneten Rotor. Die Statorwicklung mit Rückschluss und der Rotor sind in einem Motorgehäuse aufgenommen, das auf beiden Seiten mit einem Abschlussdeckel versehen ist. Zum Abführen der an der Statorwicklung und dem Rückschluss entstehenden Verlustwärme ist ein Ölkreislauf vorgesehen, wobei das Kühlmedium in axialer Richtung zunächst am Innenumfang der Statorwicklung und anschließend am Außenumfang des Rückschlusses vorbeiströmt. Dabei ist zwischen der Statorwicklung und dem Rotor eine keramische Hülse vorgesehen, die sowohl den Laufspalt zum Rotor als auch den hohlzylindrischen Strömungskanal für das Kühlmittel zwischen der keramischen Hülse und der Statorwicklung definiert. Dieser flüssigkeitsgekühlte Elektromotor ist in seinem Aufbau jedoch relativ komplex und damit sowohl kostenintensiv in der Produktion und fehleranfällig im Betrieb. Aufgrund des aktiven Kühlsystems muss dieser Elektromotor in regelmäßigen Abständen gewartet werden.

Darüber hinaus gibt es Elektromotoren, die für den Einsatz in extremen Umgebungsbedingungen hermetisch abgedichtet sind. Dabei reichen die Einsatzbereiche solcher hermetisch abgedichteten Elektromotoren von der Fahrzeugtechnik bis zur Medizintechnik. Die DE 38 04 677 A1 beschreibt beispielsweise einen solchen Elektromotor mit einer wasserdichten Abdichtung der Leiterdurchführung zwischen den Gehäusestirnrand und einem Abschlussdeckel, wobei ein außerhalb des Gehäuses vorgesehener Kontaktstift für den Steckkontakt mit einer elektrischen Anschlussleitung über eine Leiterplatte im Abschlussdeckel und Kabeladern mit einer Statorwicklung verbunden ist. Auch die Druckschrift US 10 389 202 B2 zeigt einen hermetisch abgedichteten Elektromotor, bei dem außerhalb des Motorgehäuses vorstehende Kontaktstifte über eine im Abschlussdeckel eingebettete Leiterplatte mit den Statorwicklungen verbunden sind. Neben den Kontaktstiften und den Leiterplatten ist im Abschlussdeckel des Motorgehäuses auch die Motorsteuerung eingebettet. Die beiden letztgenannten Schriften zeigen keinen Elektromotor, bei welchem eine Kühlflüssigkeit den Motor durchströmt.

Es ist die Aufgabe der vorliegenden Erfindung einen elektronisch kommutierten Elektromotor der eingangs genannten Art im Hinblick auf die Einfachheit der Montage, einen störungsfreien Betrieb und einen einfachen Aufbau zu verbessern.

Diese Aufgabe wird dadurch gelöst, dass der Abschlussdeckel als eine Anschlussbaugruppe mit mindestens einem Steckverbindungsmittel für die elektrische Kontaktierung der elektrischen Anschlussleitung mit einem entsprechenden Steckverbindungsteil der Statorwicklung des Stators ausgebildet ist, und dass die Anschlussbaugruppe eine fluiddichte Abdichtung des Motorgehäuses bewirkt. Dieser Anschluss einer Statorwicklung eines solchen hohlzylindrisch geformten Stators mit einer bevorzugt nutenlosen Statorwicklung ermöglicht eine Abdichtung des Motorgehäuses gegenüber einem Flüssigkeitsaustritt, insbesondere gegenüber einem Kühlmittel eines Kühlmittelkreislaufs. Zusätzlich wird durch die fluiddichte Verbindung der Anschlussbaugruppe mit dem Motorgehäuse verhindert, dass den Elektromotor umgebende Stoffe wie Flüssigkeiten oder Gase an die elektrische Kontaktierung des Motorgehäuses oder in das Motorgehäuse gelangen und den Elektromotor beschädigen können. Weiter wird auch der einfache elektrische Anschluss der Statorwicklung an die elektrische Anschlussleitung mittels einer elektrischen Steckverbindung ermöglicht. Dabei ist die als Abschlussdeckel zum Abschließen einer offenen Stirnseite des Motorgehäuses ausgebildete Anschlussbaugruppe als ein separates Bauteil ausgebildet, dass bei der Montage des Elektromotors beigestellt wird und beispielsweise mittels einer Schraubverbindung oder einer Clipverbindung fest mit dem Motorgehäuse verbunden wird. In einer Variante kann die Anschlussbaugruppe auch demontierbar und bei Bedarf austauschbar ausgebildet sein. Der elektrische Anschluss der Statorwicklung des Stators mit der elektrischen Anschlussleitung erfolgt bei einem erfindungsgemäßen Elektromotor innerhalb der Anschlussbaugruppe bzw. innerhalb des von der Anschlussgaugruppe zur Umgebung hin abgedichteten Motorgehäuses. Dabei ist die elektrische Verbindung zwischen dem Steckverbindungsmittel und der in die Anschlussbaugruppe hineingeführten elektrischen Anschlussleitung auch entsprechend innerhalb der Anschlussbaugruppe ausgeführt. Die elektrische Kontaktierung zwischen der elektrischen Anschlussleitung und der Statorwicklung erfolgt in der Anschlussbaugruppe durch das Steckverbindungsmittel, welches mit der elektrischen Anschlussleitung verbunden ist und dem Steckverbindungsteil welches mit der Statorwicklung verbunden ist.

Bevorzugt ist die Statorwicklung durch mehrere Einzelspulen, besonders bevorzugt durch zwölf Einzelspulen, gebildet. Die Einzelspulen werden dabei bevorzugt mittels einer Stern- oder Dreiecksverschaltung zu einem dreiphasigen Wicklungssystem mit drei Statorwicklungsphasen verschaltet. Dabei besteht jede Wicklungsphase bevorzugt aus vier Einzelspulen.

In einer besonders bevorzugten Ausführungsform weist der Stator eine Statorwicklung mit drei Statorwicklungsphasen und drei jeweils mit einer Statorwicklungsphase verbundene Steckverbindungsteile auf, die an der ersten Seite des Motorgehäuses positioniert sind, und die Anschlussbaugruppe weist drei Steckverbindungsmittel auf, die mit jeweils einer elektrischen Anschlussleitung verbunden sind. Bevorzugt sind die einzelnen Statorwicklungsphasen durch mehrere Einzelspulen, besonders bevorzugt durch vier Einzelspulen, gebildet. Die Einzelspulen werden dabei bevorzugt mittels einer Stern- oder Dreiecksverschaltung zu einem dreiphasigen Wicklungssystem verschaltet. Ein dreiphasiges Wicklungssystem ermöglicht das Anfahren oder Anhalten des Rotors aus oder in einer beliebigen Halteposition, gleichzeitig ist der Verschaltungsaufwand für drei Phasen relativ gering.

In einer vorteilhaften Ausführungsform umfasst der Rotor mindestens einen Permanentmagneten oder mehrere über den Umfang verteilte Permanentmagnetsegmente. Dabei ist der Rotor bevorzugt zwei, vier oder sechspolig ausgeführt. Vorteilhafterweise werden um den Umfang verteilte Permanentmagnete in einer Halbach-Anordnung angeordnet, wobei mehrere Permanentmagnetsegmente, insbesondere zwei Permanentmagnetsegmente, einen magnetischen Pol bilden. Durch eine mehrpolpaarige Ausführung der Permanentmagnetanordnung kann ein besonders großes Drehmoment erzeugt werden.

Bei einer bevorzugten Ausführungsform der Montage der Anschlussbaugruppe an das Motorgehäuse wird das, mit einer elektrischen Anschlussleitung verbundene, Steckverbindungsmittel durch Aufschieben mit einem entsprechenden Steckverbindungsteil der Statorwicklung verbunden und die Anschlussbaugruppe am Motorgehäuse befestigt. Neben der sehr einfachen Montage können auch unterschiedliche Anschlussbaugruppen eingesetzt werden, ohne den Stator und den drehbar innerhalb des Innenumfangs des Stators angeordneten Rotor auszutauschen oder anzupassen.

In einer einfachen Variante kann das Steckverbindungsmittel der Anschlussbaugruppe als Steckbuchse ausgebildet sein, und das entsprechende Steckverbindungsteil der Statorwicklung bevorzugt als Kontaktstift ausgebildet sein. Eine solche Steckbuchse ermöglicht eine einfache lösbare Steckverbindung für die elektrische Kontaktierung der elektrischen Anschlussleitung mit der Statorwicklung. Ein zur Steckbuchse komplementäres Steckverbindungsteil, beispielsweise ein Kontaktstift, ist direkt mit der Statorwicklung des Stators verbunden und ermöglicht so über eine einfache Steckverbindung zwischen Anschlussbaugruppe und Motorgehäuse die Stromversorgung der Statorwicklung.

Günstigerweise kann zwischen der Steckbuchse und einem Gehäuse der Anschlussbaugruppe ein Dichtungselement, bevorzugt ein O-Ring, vorgesehen sein. Für sehr hohe Anforderungen an die Dichtigkeit der Anschlussbaugruppe gegenüber der elektrischen Anschlussleitung kann neben der inhärenten Dichtwirkung der in der Anschlussbaugruppe eingebetteten elektrischen Anschlussleitung und der eingebetteten Steckbuchse das Dichtungselement, bevorzugt ein herkömmlicher-O-Ring, in einem Spalt zwischen der Steckbuchse und dem Gehäuse der Anschlussbaugruppe angeordnet sein.

Eine zweckmäßige Ausführungsform sieht vor, dass zwischen der Anschlussbaugruppe und dem Motorgehäuse eine radiale Dichtung vorgesehen ist. Die radiale Dichtung ermöglicht ein sicheres Abdichten der Schnittstelle zwischen Motorgehäuse und Anschlussbaugruppe, so dass sowohl von außen nach innen als auch von innen nach außen hohe Dichtigkeitsanforderungen erfüllt werden können. Optional kann zusätzlich zur radialen Dichtung eine ergänzende axiale Dichtung, beispielsweise eine Flanschdichtung, zwischen der Anschlussbaugruppe und dem Motorgehäuse vorgesehen sein, um die Dichtigkeit gegen einen Austritt von Kühlmittel des Kühlkreislaufs und die Dauerhaftigkeit der Abdichtung zwischen Anschlussbaugruppe und dem Motorgehäuse zu verbessern.

Eine weitere Ausgestaltung sieht vor, dass eine Kabelbaugruppe vorgesehen ist, wobei die Kabelbaugruppe die elektrische Anschlussleitung, das Steckverbindungsmittel und mindestens eine Stromschiene für die elektrische Verbindung der elektrischen Anschlussleitung mit dem Steckverbindungsmittel aufweist. Eine solche vorgefertigte Kabelbaugruppe ermöglicht eine einfachere Herstellung der Anschlussbaugruppe, insbesondere bei einem Spritzgießen oder Formverguss der Anschlussbaugruppe sowie eine gute Abdichtung der elektrischen Verbindung zwischen elektrischer Anschlussleitung, bzw. der Stromschiene und dem Gehäuse der Anschlussbaugruppe. Dabei erfolgt die Verbindung zwischen der Stromschiene und dem Steckverbindungsmittel bevorzugt durch Pressen, Schweißen oder Löten. Auf der anderen Seite erfolgt die Verbindung der elektrischen Anschlussleitung mit der Stromschiene, insbesondere mittels Schweißen oder Löten. Die Kabelbaugruppe kann entsprechend der Anzahl der Statorwicklungsphasen des Stators mehrere elektrische Anschlussleitungen, Stromschienen und Steckverbindungsmittel aufweisen, die für eine zeitsparende Weiterverarbeitung zu einer gemeinsamen Kabelbaugruppe zusammengefasst sind. Beim Herstellungsprozess der Anschlussbaugruppe wird die Kabelbaugruppe in einem Formwerkzeug an einer definierten Position gehalten, so dass bei der späteren Montage der Anschlussbaugruppe an der offenen Stirnseite beziehungsweise an der ersten Seite des Motorgehäuses die Position der Steckverbindungsmittel genau zu der Position der am Motorgehäuse positionierten und mit den Statorwicklungsphasen des Stators verbundenen Steckverbindungsteilen zusammenpasst.

Bevorzugt kann die Kabelbaugruppe drei elektrische Anschlussleitungen, drei Steckbuchsen und drei Stromschienen aufweisen, wobei die drei elektrischen Anschlussleitungen, die drei Steckbuchsen und die drei Stromschienen miteinander mechanisch verbunden sind. Das Zusammenfassen mehrerer Anschlusskomponenten zu einer gemeinsamen Kabelbaugruppe ermöglicht ein einfaches Handhaben der gemeinsamen Kabelbaugruppe bei der Herstellung der Anschlussbaugruppe.

Eine praktische Ausbildung sieht vor, dass die Anschlussbaugruppe aus einem thermoplastischen oder duroplastischen Kunststoff mittels Spritzguss oder Formverguss hergestellt ist, wobei eine Anschlusselektronik mit der elektrischen Anschlussleitung, und dem Steckverbindungsmittel in der Anschlussbaugruppe eingebettet ist. Die Anschlusselektronik ermöglicht einen einfachen elektrischen Anschluss der einzelnen Statorwicklungsphasen an eine Stromversorgung, wobei diese elektrische Schnittstelle in der Anschlussbaugruppe verspritzt oder vergossen ist. Die Anschlusselektronik kann dabei in Form einer bestückten Leiterplatte mit allen erforderlichen Bauteilen und Anschlusskabeln ausgebildet sein.

Eine weitere Modifikation sieht vor, dass eine Kommutierungselektronik für die Kommutierung des Elektromotors vorgesehen ist, wobei die Kommutierungselektronik ebenfalls in der Anschlussbaugruppe eingebettet ist. Dadurch kann auf eine separate Bereitstellung und Anordnung der Kommutierungselektronik am Motorgehäuse verzichtet werden. Die Kommutierungselektronik ist insbesondere als eine Leiterplatte mit allen notwendigen Bauteilen, elektronischen Komponenten und Kabeln ausgebildet und kann optional mit der Anschlusselektronik zusammengefasst sein. Des Weiteren kann die Kommutierungselektronik auch einen integrierten Sensor aufweisen, bevorzugt einen magnetfeldempfindlichen Winkel-Positionssensor, der insbesondere das Magnetfeld eines am Ende einer Rotorwelle montierten diametralen Steuermagneten erfasst. Ein solcher integrierter Positionssensor ermöglicht eine einfache Steuerung eines elektronisch kommutierten Elektromotors.

Eine besondere Ausführungsform sieht vor, dass die Anschlusselektronik und/oder die Kommutierungselektronik mit einer zusätzlichen Schicht aus einem thermoplastischen oder duroplastischen Kunststoff versehen ist, die in einem vorgelagerten ersten Schritt mittels Spritzguss, Transferpressen oder Formverguss aufgetragen ist. Dadurch sind die empfindlichen elektrischen und elektronischen Bauteile durch einen 2-stufigen Prozess doppelt umspritzt und/oder vergossen und entsprechend besonders geschützt. Bei der Herstellung der Anschlussbaugruppe wird daher in einem ersten Prozessschritt die Anschlusselektronik und/oder die Kommutierungselektronik mit allen Leiterplatten, Bauteilen und Kabeln allseitig mit einer definierten Materialstärke eines vorzugsweise thermoplastischen Kunststoffs umspritzt. Für eine hermetische Abdichtung werden diese bereits eingekapselten Komponenten im zweiten Prozessschritt ein weiteres Mal in einem thermoplastischen oder duroplastischen Kunststoff eingebettet, wodurch auch mögliche Haltepositionen aus dem ersten Prozessschritt sicher abgedichtet werden. Neben der Abdichtung der Komponenten wird in diesem zweiten Prozessschritt auch die Gehäuseform der Anschlussbaugruppe mit integriertem Abschlussdeckel ausgebildet.

Eine vorteilhafte Ausgestaltung sieht vor, dass weiter der Kühlmittelkreislauf zum Durchleiten eines Kühlmittels durch den Elektromotor einen ersten Kühlmittelkanal zwischen dem Motorgehäuse und dem Außenumfang des Stators, einen zweiten Kühlmittelkanal zwischen dem Innenumfang des Stators und dem Rotor sowie eine Kühlmittelumlenkung zur Fluidverbindung des ersten Kühlmittelkanals und des zweiten Kühlmittelkanals aufweist, wobei die Kühlmittelumlenkung, bevorzugt zumindest teilweise, durch die Anschlussbaugruppe ausgebildet ist. Bei einem erfindungsgemäßen Elektromotor wird insbesondere Öl oder eine spezielle Wärmeüberträgerflüssigkeit mit vorzugsweise einem Siedepunkt von über 200°C als Kühlmittel eingesetzt. Über das Durchleiten eines solchen Kühlmittels durch den Kühlmittelkreislauf wird eine wirkungsvolle Kühlung des Elektromotors erreicht. Dabei wird am Spalt zwischen der Außenwandung des Motorgehäuses und dem Außenumfang des Stators entsprechende Ummagnetisierungs- und Wirbelstromverluste des Rückschlussmaterials vom Kühlmittel absorbiert. Beim Durchströmen des Laufspalts zwischen dem Innenumfang des Stators und dem Rotor werden die ohmschen Verluste und Wirbelstromverluste in der Statorwicklung abgeführt. Damit haben die beiden wärmeabgebenden Komponenten, die Statorwicklung und Rückschluss, einen unmittelbaren Kontakt mit dem Kühlmittel und ermöglichen entsprechend eine optimale Wärmeabfuhr. Der Kühlmittelkreislauf ermöglicht vorzugsweise eine Durchflussrate von 2 bis 7 Litern pro Minute. Dabei wird das Kühlmittel mit einem Druck zwischen 1 und 10bar, vorzugsweise zwischen 3 bis 5bar durch den Kühlmittelkreislauf gepresst. Durch das Kühlmittel kann eine thermische Verlustleistung des Elektromotors von 3kW, 5kW oder mehr abgeführt werden.

Eine sinnvolle Ausbildung sieht vor, dass der zweite Kühlmittelkanal zwischen dem Innenumfang des Stators und dem Rotor eine kleinere Querschnittsfläche aufweist als der erste Kühlmittelkanal zwischen dem Motorgehäuse und dem Außenumfang des Stators. Da bei einer hohen Belastung des Elektromotors der größte Teil der Verlustleistung und damit der Wärmeentwicklung in der Statorwicklung auftritt, ermöglicht der engere Querschnitt im Laufspalt zwischen Statorwicklung und Rotor über eine turbulente Strömung des Kühlmittels eine bessere Wärmeübertragung und geringere Wärmebelastung des Elektromotors. Weiter kann bei einem großen Luftspalt zwischen Stator und Rotor kein hohes Drehmoment erzeugt werden bzw. ist zur Erzeugung eines hohen Drehmoments ein kleiner Luftspalt notwendig.

In einer Modifikation der Anschlussbaugruppe kann die Kühlmittelumlenkung als Bohrung oder Durchbruch in der Anschlussbaugruppe ausgebildet sein. Dies ermöglicht eine gezielte Umlenkung des Kühlmittels im Kühlmittelkreislauf und vermeidet Stillstandszonen sowie Ablagerungen im Kühlmittelkreislauf. Entsprechend kann eine in der Anschlussbaugruppe ausgebildete Kühlmittelumlenkung zur Fluidverbindung des ersten und zweiten Kühlmittelkanals zu einer verbesserten Wärmeübertragung beitragen.

Eine praktische Variante sieht vor, dass der Kühlmittelkreislauf einen am Umfang des Motorgehäuses angeordneten Kühlmittelzulauf zum ersten Kühlmittelkanal und bevorzugt einen Kühlmittelablauf aus dem zweiten Kühlmittelkanal aufweist, wobei der Kühlmittelablauf an einer der Anschlussbaugruppe gegenüberliegenden zweiten Seite des Motorgehäuses angeordnet ist. Über den Kühlmittelzulauf am Motorgehäuse, der beispielsweise als am Umfang verteilte Bohrungen ausgebildet sein kann, strömt das Kühlmittel direkt in den Spalt zwischen dem Motorgehäuse und dem Außenumfang des Stators und dann über die Kühlmittelumlenkung und den zweiten Kühlmittelkanal zum an der zweiten Seite des Motorgehäuses vorgesehenen Ablauf, der wiederum als Bohrungen ausgebildet sein kann. Dadurch kann auch das abtriebsseitige Kugellager der Motorwelle von dem als Kühlmittel verwendeten Öl gekühlt und mit Schmierstoff versorgt werden.

In einer alternativen Ausführungsvariante können der Kühlmittelzulauf und Kühlmittelablauf auch vertauscht ausgeführt sein, sodass der Kühlmittelzulauf an der zweiten Seite des Motorgehäuses vorgesehen ist und der Kühlmittelablauf am Umfang des Motorgehäuses. Bei dieser Ausführung fließt das Kühlmittel von dem alternativen Kühlmittelzulauf an der zweiten Seite des Motorgehäuses zuerst durch den zweiten Kühlmittelkanal und weiter über die Kühlmittelumlenkung durch den ersten Kühlmittelkanal zum alternativen Kühlmittelablauf am Umfang des Motorgehäuses.

Eine weitere vorteilhafte Ausführungsform sieht vor, dass die Anschlussbaugruppe eine fluiddichte Abdichtung zwischen der elektrischen Kontaktierung des Steckverbindungsmittels der elektrischen Anschlussleitung mit dem entsprechenden Steckverbindungsteil der Statorwicklung des Stators und dem Kühlmittelkreislauf des Elektromotors bewirkt.

Des Weiteren bezieht sich die Erfindung auf eine Anschlussbaugruppe für einen elektronisch kommutierten Elektromotor nach einer der vorbeschriebenen Ausführungsformen, wobei die Anschlussbaugruppe als Abschlussdeckel des elektronisch kommutierten Elektromotors ausgebildet ist, sowie mindestens eine elektrische Anschlussleitung und mindestens ein Steckverbindungsmittel für die elektrische Kontaktierung der Statorwicklung mit der elektrischen Anschlussleitung aufweist und eine fluiddichte Abdichtung des Motorgehäuses bewirkt. Diese Anschlussbaugruppe ermöglicht in Verbindung mit dem Motorgehäuse des Elektromotors eine fluiddichte Abdichtung der entsprechenden Seite des Motorgehäuses sowie die elektrische Kontaktierung der Statorwicklung mittels des Steckverbindungsmittels. Die Anschlussbaugruppe bildet somit neben einer gegen einen Flüssigkeitsaustausch abgedichteten Schnittstelle auch eine elektrische Schnittstelle für die Energieversorgung des Elektromotors.

In einer besonders bevorzugten Anwendung ist der elektronisch kommutierte Elektromotor mit flüssigkeitsgekühltem Stator in der Rohstoffförderung, insbesondere bei der Erdöl -und Erdgasförderung einsetzbar.

Im Folgenden wird eine nicht-einschränkende Ausführungsform der Erfindung anhand beispielhafter Zeichnungen näher erläutert. Es zeigen:
- Fig. 1: eine teilweise frei geschnittene Seitenansicht eines erfindungsgemäßen elektronisch kommutierten Elektromotors,
- Fig. 2: eine Schnittansicht durch den Elektromotor aus Fig. 1,
- Fig. 3: eine perspektivische Explosionsdarstellung des Elektromotors aus Fig. 1,
- Fig. 4: eine teilweise frei geschnittene, vergrößerte Ansicht der Anschlussbaugruppe des Elektromotors aus Fig. 1, und
- Fig. 5: eine perspektivische Ansicht einer vormontiertem Kabelbaugruppe für eine Anschluss-baugruppe des erfindungsgemäßen Elektromotors aus Fig. 1.

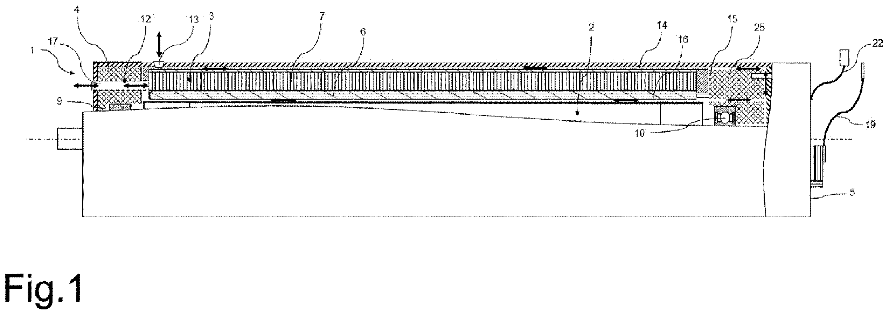

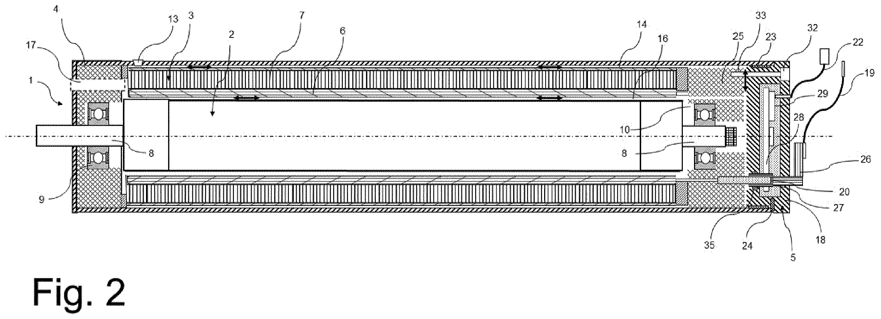

Der in den Fig. 1 und 2 gezeigte erfindungsgemäße elektronisch kommutierte Elektromotor 1 ist als Innenläufer konzipiert und flüssigkeitsgekühlt. Der Elektromotor 1 umfasst einen Rotor 2, der konzentrisch zu einem hohlzylindrischen Stator 3 ausgerichtet und drehbar in dem Stator 3 angeordnet ist. Der Rotor 2 ist sowohl in der teilweise freigeschnittenen Seitenansicht des Elektromotors 1 in Fig. 1 als auch in der zugehörigen Schnittansicht in Fig. 2 nicht geschnitten dargestellt. Der Rotor 2 umfasst mindestens einen Permanentmagneten oder mehrere über den Umfang verteilte Permanentmagnetsegmente. In einem zylindrisch ausgebildeten Motorgehäuse 4, bevorzugt aus Stahl, können neben dem Stator 3 und dem Rotor 2 auch alle weiteren Bauteile des erfindungsgemäßen Elektromotors 1 untergebracht bzw. angeordnet sein. Die erste Seite des Motorgehäuses 4 ist mit einer Anschlussbaugruppe 5 fluiddicht verschlossen. Die Anschlussbaugruppe 5 dient der elektrischen Kontaktierung des Elektromotors 1. Die im wesentlichen hermetische Abdichtung des Motorgehäuses 4 durch die Anschlussbaugruppe 5 verhindert sowohl ein Austreten von Kühlflüssigkeit aus dem Inneren des Elektromotors 1 als auch ein Eindringen von unerwünschten Medien in den Elektromotor 1. Der Anschlussbaugruppe 5 gegenüber liegt die zweite Seite oder Abtriebsseite des Motorgehäuses 4. Das Motorgehäuse 4 kann becherförmig, einstückig ausgestaltet sein, wobei der Boden des Bechers die zweite Seite des Motorgehäuses und das offene Ende des Bechers die erste Seite des Motorgehäuses darstellt. Das erste offene Ende des Motorgehäuses 4 kann mit der Anschlussbaugruppe 5 fluiddicht verschlossen werden. Ein einstückig, aus zylindrischem Motorgehäuse und zweiter Seite des Motorgehäuses bestehendes Motorgehäuse 4 hat den Vorteil, dass keine Übergangsverbindung zwischen den beiden Teilen besteht, durch welche Kühlflüssigkeit aus dem inneren des Elektromotors 1 austreten oder unerwünschten Medien in den Elektromotor 1 eindringen können. Auch kann ein einstückiges Motorgehäuse 4 kostengünstiger hergestellt werden, da der zylindrische Teil des Motorgehäuses nicht in einem zusätzlichen Arbeitsschritt fluiddicht mit der zweiten Seite des Motorgehäuses verbunden werden muss.

Der flüssigkeitsgekühlte Stator 3 des erfindungsgemäßen Elektromotors 1 besteht aus einer eisenlosen hohlzylindrischen selbsttragenden Statorwicklung 6, die sich auf mehrere Einzelspulen aufteilt, und einem außen angeordneten weichmagnetischen Rückschluss 7. Der Außen-Rückschluss 7 besteht aus einem Blechpaket, ist ebenfalls hohlzylindrisch ausgebildet und umschließt die Statorwicklung 6, wobei der Rückschluss 7 formschlüssig an der Statorwicklung 6 anliegt. Die hohlzylindrische Statorwicklung 6 kann aus einem Backlackdraht gewickelt sein, der bei der Herstellung erwärmt wird und ausgehärtet die Statorwicklung 6 bei niedrigen Temperaturen formstabil zusammenhält. Weiter kann eine hohlzylindrische keramische Stützhülse vorgesehen sein, die für den Einsatz bei hohen Temperaturen innerhalb und konzentrisch zur Statorwicklung 6 angeordnet ist. Eine solche keramische Stützhülse sichert auch bei hohen Einsatztemperaturen den erforderlichen Luftspalt zwischen Rotor 2 und Stator 3. Die Statorwicklung 6 kann weiter zusätzlich mit einer Vergussmasse überzogen sein, die insbesondere bei hohen Betriebstemperaturen die Stabilität der Statorwicklung 6 erhöht und die Statorwicklung 6 vollständig umkapselt.

Eine Rotorwelle 8, die sich koaxial zum Rotor 2 durch den Rotor 2 hindurch erstreckt oder als Wellenstummel am Rotor 2 befestigt ist, ist sowohl in einem an der zweiten Seite des Motorgehäuses 4 angeordneten Wälzlager 9 als auch in einem gegenüberliegenden zweiten Wälzlager 10 gelagert, das in einem stirnseitigen Flansch 25 im Bereich der ersten Seite des Motorgehäuses aufgenommen ist. Der aus dem Motorgehäuse 4 vorstehende Teil der Rotorwelle kann eine Anschlussverzahnung aufweisen.

Der erfindungsgemäße elektronisch kommutierte Elektromotor 1 weist weiter einen Kühlmittelkreislauf 12 auf, mit einem Kühlmittelzulauf 13, der aus mehreren am Umfang des Motorgehäuses 4 vorgesehenen und gegenüber dem Motorgehäuse 4 in einer umlaufenden Vertiefung angeordneten Bohrungen ausgebildet ist, einem ersten Kühlmittelkanal 14, der ringförmig zwischen dem Motorgehäuse 4 und dem Außenumfang des Stators verläuft, eine Kühlmittelumlenkung 15, die zwischen dem stirnseitigen Flansch 25 und zugehörigen Flächen der Anschlussbaugruppe 5 ausgebildet ist und bevorzugt mehrere Bohrungen oder Durchbrüche in der im stirnseitigen Flansch 25 aufweist, einem zweiten Kühlmittelkanal 16, der sich zwischen dem Innenumfang des Stators 3 und dem Rotor 2 ringförmig erstreckt, und einem Kühlmittelablauf 17, der durch mehrere Bohrungen am Boden des Motorgehäuses 4 ausgebildet ist. Die Anschlussbaugruppe 5 als Abschlussdeckel 18 verhindert durch das fluiddichte Abschließen des Motorgehäuses 4, dass Kühlflüssigkeit aus dem Kühlmittelkreislauf 12 austritt.

Wie in Fig. 1 und 2 durch die Pfeile dargestellt, kann das Kühlmittel entweder durch den Kühlmittelzulauf 13 in den Kühlmittelkreislauf 12 ein und von dort über den ringförmigen ersten Kühlmittelkanal 14, die Kühlmittelumlenkung 15 und den zweiten ringförmigen Kühlmittelkanal 16 zum Kühlmittelablauf 17 strömen, wo das Kühlmittel wieder aus dem Elektromotor 1 austritt, oder es kann alternativ in umgekehrter Richtung durch den Kühlmittelablauf 17 ein, durch den zweiten Kühlmittelkanal 16 hindurch und über die Kühlmittelumlenkung 15 und den ersten Kühlmittelmittelkanal zum Kühlmittelmittelzulauf 12, fließen durch welchen es dann austritt. In dem ersten Kühlmittelkanal 14 zwischen dem Motorgehäuse 4 und dem Außenumfang des Stators 3 werden vom Kühlmittel die Ummagnetisierungs- und Wirbelstromverluste im Rückschluss 7 aufgenommen, während beim Durchströmen des ringförmigen zweiten Kühlmittelkanals 14 im Spalt zwischen Rotor 2 und Stator 3 die Verlustwärme der ohmschen Verluste und Wirbelstromverluste in der Statorwicklung 6 abgeführt werden. Da bei einer hohen Belastung des Elektromotors 1 der größte Teil der Verlustleistung und damit der Abwärme in der Statorwicklung 6 auftritt, sind die Querschnitte des ersten Kühlmittelkanals 14 und des zweiten Kühlmittelkanals 14 so dimensioniert, dass im Bereich des zweiten Kühlmittelkanals 16 eine turbulente Strömung für eine optimale Wärmeübertragung erreicht wird. Da als Kühlmittel für den Elektromotor 1 ein Thermoöl eingesetzt wird, ist sowohl das Wälzlager 10 in der Anschlussbaugruppe 5 als auch das Wälzlager 9 am Boden des Motorgehäuses 4 zum zweiten Kühlmittelkanal 16 hin offen ausgebildet. Diese fluidoffene Verbindung zu den Wälzlagern 9,10 ermöglicht sowohl die Kühlung als auch die Versorgung der Wälzlager 9,10 mit einem Schmierstoff.

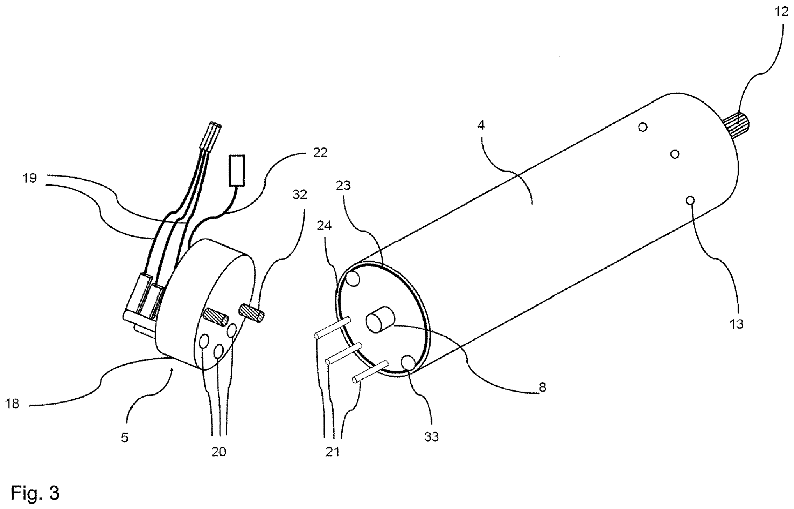

Die perspektivische Explosionsansicht in Fig. 3 zeigt neben dem stirnseitig offenen Motorgehäuse 4 mit den darin aufgenommenen Rotor 2 und Stator 3 auch die separate Anschlussbaugruppe 5. Die Anschlussbaugruppe 5 weist neben dem eigentlichen Abschlussdeckel 18 drei elektrische Anschlussleitungen 19 auf, die über zugehörige Steckverbindungmittel 20 mit entsprechenden Steckverbindungsteilen 21 der Statorwicklung 6 bei der Montage der Anschlussbaugruppe 5 auf dem Motorgehäuse 4 elektrisch verbunden werden. Die Anschlussbaugruppe 5 weist weiter eine Steuerleitung 22 mit einem zugehörigen Stecker zum Anschluss der Motorelektronik (Anschluss- und/oder Kommutierungselektronik) 28 des Elektromotors 1 auf. Die Anschlussbaugruppe 5 kann bei der Montage des Elektromotors 1 mit dem Abschlussdeckel 18 auf die offene Seite des Motorgehäuses 4 aufgesteckt und befestigt werden. Zur sicheren Abdichtung des Elektromotors 1 kann neben einer radialen Dichtung 23 zum Innenumfang des Motorgehäuses 4 zusätzlich auch eine Axialdichtung 24 auf dem stirnseitigen Flansch des Motorgehäuses 4 vorgesehen sein. Der Einsatz einer zusätzlichen radialen Dichtung 23 zu einer üblichen Axialdichtung 24 ermöglicht eine sehr hohe Dichtigkeit des Elektromotors 1 gegenüber der Umgebung und auch eine hohe Dauerhaltbarkeit der Dichtfunktion. Die mit den Statorwicklung 6 verbundenen Steckverbindungsteile 21 und das Ende der Rotorwelle 8 erstrecken sich durch den stirnseitigen Flansch 25, zur Fixierung des Stators 3 und Lagerung des Rotors 2 über die im Wälzlager 10 geführte Rotorwelle 8.

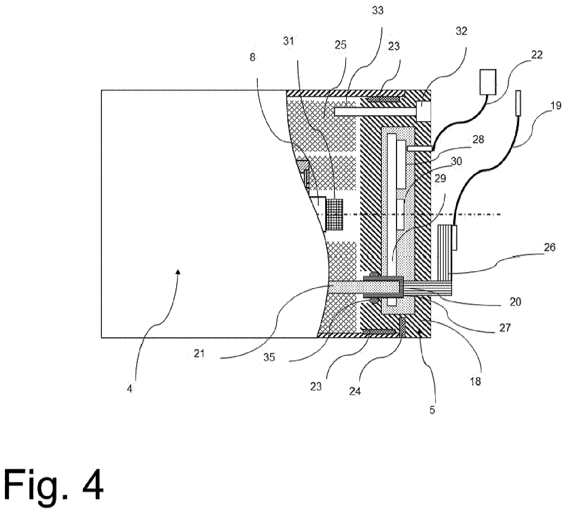

Fig. 4 zeigt einen Schnitt durch die am Motorgehäuse 4 befestigte Anschlussbaugruppe 5. Die Anschlussbaugruppe 5 sitzt mit dem zugehörigen Anschlussdeckel 18 in der offenen Stirnseite des becherförmigen Motorgehäuses 4, wobei das Innere des Elektromotors 1 mittels der radialen Dichtung 23 und der Axialdichtung 24 im Bereich des anliegenden Abschlussdeckels 18 gegenüber der Umgebung hermetisch, d.h. fluiddicht, abgedichtet ist. Die Anschlussleitungen 19 sind über Stromschienen 26 mit dem Steckverbindungsmittel 20 verbunden. Wie in der vergrößerten Ansicht in Fig. 4 gut zu erkennen sind die Steckverbindungsmittel 20 der Anschlussbaugruppe 5 als Steckbuchsen 27 ausgebildet, die in dem Gehäuse der Anschlussbaugruppe 5 eingebettet sind. Zusätzlich zu der Einbettung in dem Gehäuse der Anschlussbaugruppe 5 ist am offenen Ende der Steckbuchsen 27 gegenüber dem Gehäuse der Anschlussbaugruppe 5 ein O-Ring 35 vorgesehen, durch den die Abdichtung der Steckbuchsen 27 und damit auch der elektrischen Verbindung mit der Stromschiene 26 und der Anschlussleitung 19 verbessert wird. Das stiftförmig ausgebildete Steckverbindungsteil 21, das sich von den Statorwicklung 6 durch den stirnseitigen Flansch 25 erstreckt, ist in der Steckbuchse 27 aufgenommen und ermöglicht die elektrische Kontaktierung der Statorwicklung 6 des Stators 3.

Die Anschlussbaugruppe 5 umfasst neben dem Abschlussdeckel 18 mit den darin eingebetteten Steckbuchsen 27 sowie zugehörigen Stromschienen 26 und Anschlussleitungen 19 zur Stromversorgung der Statorwicklung 6 auch die Motorelektronik 28, die hier in Form einer mit allen Bauteilen der Kommutierungselektronik und einem Sensor 30, bevorzugt ein magnetfeldempfindlicher Winkel-Positionssensor, in das Gehäuse der Anschlussbaugruppe 5 eingebettet ist. Der Sensor 30 erfasst das Magnetfeld eines am Ende der Rotorwelle 8 montierten Steuermagneten 31, um den Betrieb des Elektromotors 1 zu steuern.

Bei der Herstellung der Anschlussbaugruppe 5 wird in einem ersten Prozessschritt die Motorelektronik 28 mit der Leiterplatte 29, den Elektronikbauteilen für die Kommutierung, dem Sensor 30 und den Anschlüssen der Steuerleitung 22 allseitig mit einer definierten Materialstärke eines vorzugsweise thermoplastischen Kunststoffs oder alternativ duroplastischem Kunststoffs umspritzt, beispielsweise in einem Thermoplast-Spritzguss, einem Duroplast-Transferpressen oder einem Formverguss. In einem zweiten Prozessschritt wird dieses Bauteil mit dem eigentlichen Gehäuse der Anschlussbaugruppe 5 zur Ausbildung des Abschlussdeckels 18 nochmals mit einem thermoplastischen oder duroplastischen Kunststoff umspritzt oder vergossen, so dass auch mögliche Haltepositionen aus dem ersten Prozessschritt sicher gegenüber den Flüssigkeiten im Elektromotor 1 abgedichtet sind.

Wie bereits in Fig. 3 gezeigt, wird die Anschlussbaugruppe 5 lösbar mit dem Motorgehäuse 4 verbunden, indem die Steckverbindungsmittel 20 auf die Steckverbindungsteile 21 und der Abschlussdeckel 18 in das offene Ende an der ersten Seite des Motorgehäuses 4 gesteckt werden. Neben der Steckverbindung des Abschlussdeckels 18 und der Steckverbindungsmittel 20 kann in der in Fig. 3 gezeigten Ausführungsform die Anschlussbaugruppe 5 über Schrauben 32 und entsprechende Gewindebohrungen 33 in dem Motorgehäuse 4 lösbar verschraubt werden. Alternativ kann eine Verbindung der Anschlussbaugruppe 5 mit dem Motorgehäuse 4 auch mittels einer Rastierung realisiert werden. Diese Verbindung kann beispielsweise durch die Rastierung oder Verklebung auch nicht lösbar ausgestaltet sein, um zu verhindern, dass sich die Verbindung durch Vibrationen selbst löst.

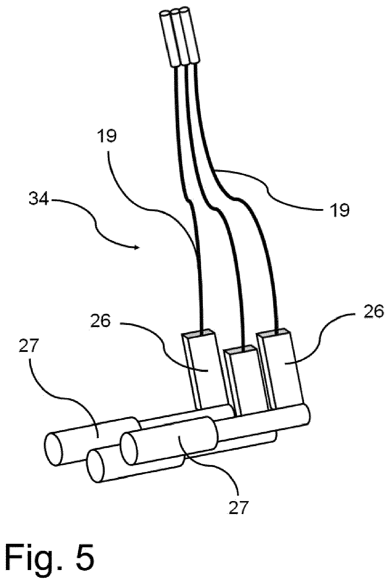

Fig. 5 zeigt eine vormontierte Kabelbaugruppe 34 mit 3 Anschlussleitungen 19, die jeweils mit einer Stromschiene 26 und einer Steckbuchse 27 verbunden ist. Die beispielsweise aus Kupfer hergestellten Stromschienen 26 können mittels Pressen, Schweißen oder Löten mit den Steckbuchsen 27 verbunden sein. Die Anschlussleitungen 19 können wiederum durch Schweißen oder Löten mit der Stromschiene 26 verbunden sein. Weiterhin sind die einzelnen Anschlussleitungen 19, Stromschienen 26 und zugehörigen Steckbuchsen 27 zu einer gemeinsamen Kabelbaugruppe 34 zusammengefasst, damit die Kabelbaugruppe 34 bei der Herstellung der Anschlussbaugruppe 5 im zweiten Prozessschritt zur Herstellung des Gehäuses der Anschlussbaugruppe 5 und Ausbildung des Abschlussdeckels 18 beigefügt werden kann. Die Steckbuchsen 27 werden bei dem Herstellprozess der Anschlussbaugruppe 5 von einem Formwerkzeug in einer für den Anschluss an die Steckverbindungsteile 21 definierten Position gehalten, so dass bei einer späteren Montage der Anschlussbaugruppe 5 auf das Motorgehäuse 4 die Steckbuchsen 27 genau zu der Position der im Motorgehäuse 4 vorgesehenen Steckverbindungsteile 21 passen.

### Bezugszeichenliste

- 1: Elektromotor
- 2: Rotor
- 3: Stator
- 4: Motorgehäuse
- 5: Anschlussbaugruppe
- 6: Statorwicklung
- 7: Rückschluss
- 8: Rotorwelle
- 9: Wälzlager
- 10: Wälzlager
- 12: Kühlmittelkreislauf
- 13: Kühlmittelzulauf
- 14: erster Kühlmittelkanal
- 15: Kühlmittelumlenkung
- 16: zweiter Kühlmittelkanal
- 17: Kühlmittelablauf
- 18: Abschlussdeckel
- 19: Anschlussleitungen
- 20: Steckverbindungsmittel
- 21: Steckverbindungsteile
- 22: Steuerleitung
- 23: radiale Dichtung
- 24: Axialdichtung
- 25: stirnseitiger Flansch
- 26: Stromschienen
- 27: Steckbuchsen
- 28: Motorelektronik (Anschluss- und/oder Kommutierungselektronik)
- 29: Leiterplatte
- 30: Sensor
- 31: Steuermagneten
- 32: Schrauben
- 33: Gewindebohrungen
- 34: Kabelbaugruppe
- 35: O-Ring

## Patentansprüche

1. Elektronisch kommutierter Elektromotor (1) mit einem flüssigkeitsgekühlten Stator (3) mit einer eisenlosen hohlzylindrischen Statorwicklung (6) und einem Kühlmittelkreislauf (12) zum Durchleiten eines Kühlmittels durch den Elektromotor (1), einem konzentrisch zum Stator (3) drehbar angeordneten Rotor (2), einem den Stator (3) und den Rotor (2) aufnehmenden Motorgehäuse (4), einem Abschlussdeckel (18) und mindestens einer elektrischen Anschlussleitung (19) zum elektrischen Anschluss der Statorwicklung (6),
**dadurch gekennzeichnet, dass** der Abschlussdeckel (18) als eine Anschlussbaugruppe (5) mit mindestens einem Steckverbindungsmittel (20) für die elektrische Kontaktierung der elektrischen Anschlussleitung (19) mit einem entsprechenden Steckverbindungsteil (21) der Statorwicklung (6) des Stators (3) ausgebildet ist, und dass die Anschlussbaugruppe (5) eine fluiddichte Abdichtung des Motorgehäuses (4) bewirkt.

2. Elektromotor (1) nach Anspruch 1,
**dadurch gekennzeichnet, dass** der Stator (3) eine Statorwicklung (6) mit drei Statorwicklungsphasen und drei jeweils mit einer Statorwicklungsphase verbundene Steckverbindungsteile (21) aufweist, die an der ersten Seite des Motorgehäuses (4) positioniert sind, und die Anschlussbaugruppe (5) drei Steckverbindungsmittel (20) aufweist, die jeweils mit einer elektrischen Anschlussleitung (19) verbunden sind.

3. Elektromotor (1) nach Anspruch 1 oder 2,
**dadurch gekennzeichnet, dass** das Steckverbindungsmittel (20) der Anschlussbaugruppe (5) als Steckbuchse (27) ausgebildet ist und das entsprechende Steckverbindungsteil (21) der Statorwicklung (6) bevorzugt als Kontaktstift ausgebildet ist.

4. Elektromotor (1) nach Anspruch 3,
**dadurch gekennzeichnet, dass** zwischen der Steckbuchse (27) und einem Gehäuse der Anschlussbaugruppe (5) ein Dichtungselement, bevorzugt ein O-Ring (35), vorgesehen ist.

5. Elektromotor (1) nach einem der Ansprüche 1 bis 4,
**dadurch gekennzeichnet, dass** zwischen der Anschlussbaugruppe (5) und dem Motorgehäuse (4) eine radiale Dichtung (23) vorgesehen ist.

6. Elektromotor (1) nach einem der Ansprüche 1 bis 5,
**dadurch gekennzeichnet, dass** eine Kabelbaugruppe (34) vorgesehen ist, wobei die Kabelbaugruppe (34) die elektrische Anschlussleitung (19), das Steckverbindungsmittel (20) und mindestens eine Stromschiene (26) für die elektrische Verbindung der elektrischen Anschlussleitung (19) mit dem Steckverbindungsmittel (20) aufweist.

7. Elektromotor (1) nach Anspruch 6,
**dadurch gekennzeichnet, dass** die Kabelbaugruppe (34) drei elektrische Anschlussleitungen (19), drei Steckbuchsen (27) und drei Stromschienen (26) aufweist, wobei die drei elektrischen Anschlussleitungen (19), die drei Steckbuchsen (27) und die drei Stromschienen (26) miteinander mechanisch verbunden sind.

8. Elektromotor (1) nach einem der Ansprüche 1 bis 7,
**dadurch gekennzeichnet, dass** die Anschlussbaugruppe (5) aus einem thermoplastischen oder duroplastischen Kunststoff mittels Spritzguss oder Formverguss hergestellt ist, wobei eine Anschlusselektronik (28) mit der elektrischen Anschlussleitung (19) und dem Steckverbindungsmittel (20) in der Anschlussbaugruppe (5) eingebettet ist.

9. Elektromotor (1) nach Anspruch 8,
**dadurch gekennzeichnet, dass** eine Kommutierungselektronik (28) für die Kommutierung des Elektromotors (1) vorgesehen ist, wobei die Kommutierungselektronik (28) in der Anschlussbaugruppe (5) eingebettet ist.

10. Elektromotor (1) nach Anspruch 9,
**dadurch gekennzeichnet, dass** die Kommutierungselektronik (28) einen integrierten Sensor (30) aufweist, bevorzugt ein magnetfeldempfindlicher Winkel-Positionssensor, der insbesondere das Magnetfeld eines am Ende einer Rotorwelle (8) montierten diametralen Steuermagneten (31) erfasst.

11. Elektromotor (1) nach einem der Ansprüche 8 bis 10,
**dadurch gekennzeichnet, dass** die Anschlusselektronik und/oder die Kommutierungselektronik (28) mit einer zusätzlichen Schicht aus einem thermoplastischen oder duroplastischen Kunststoff versehen ist, die in einem vorgelagerten Schritt mittels Spritzguss, Transferpressen oder Formverguss aufgetragen ist.

12. Elektromotor (1) nach einem der Ansprüche 1 bis 11,
**dadurch gekennzeichnet, dass** der Kühlmittelkreislauf (12) zum Durchleiten eines Kühlmittels durch den Elektromotor (1) einen ersten Kühlmittelkanal (14) zwischen dem Motorgehäuse (4) und dem Außenumfang des Stators (3), einen zweiten Kühlmittelkanal (16) zwischen dem Innenumfang des Stators (3) und dem Rotor (2) sowie eine Kühlmittelumlenkung (15) zur Fluidverbindung des ersten Kühlmittelkanals (14) und des zweiten Kühlmittelkanals (16) aufweist, wobei die Kühlmittelumlenkung (15), bevorzugt zumindest teilweise, durch die Anschlussbaugruppe (5) ausgebildet ist.

13. Elektromotor (1) nach Anspruch 12,
**dadurch gekennzeichnet, dass** der zweite Kühlmittelkanal (16) zwischen dem Innenumfang des Stators (3) und dem Rotor (2) eine kleinere Querschnittsfläche ausweist als der erste Kühlmittelkanal (14) zwischen dem Motorgehäuse (4) und dem Außenumfang des Stators (3).

14. Elektromotor (1) nach Anspruch 12 oder 13,
**dadurch gekennzeichnet, dass** der Kühlmittelkreislauf (12) einen am Umfang des Motorgehäuses (4) angeordneten Kühlmittelzulauf (13) zum ersten Kühlmittelkanal (14) aufweist, und bevorzugt einen Kühlmittelablauf (17) aus dem zweiten Kühlmittelkanal (16) aufweist, der an einem der Anschlussbaugruppe (5) gegenüberliegenden zweiten Seite des Motorgehäuses (4) angeordnet ist.

15. Elektromotor (1) nach einem der Ansprüche 1 bis 14,
**dadurch gekennzeichnet, dass** die Anschlussbaugruppe (5) eine fluiddichte Abdichtung zwischen der elektrischen Kontaktierung des Steckverbindungsmittels (20) der elektrischen Anschlussleitung (19) mit dem entsprechenden Steckverbindungsteil (21) der Statorwicklung (6) des Stators (3) und dem Kühlmittelkreislauf (12) des Elektromotors (1) bewirkt.

16. Anschlussbaugruppe (5) für einen elektronisch kommutierten Elektromotor (1) nach einem der Ansprüche 1 bis 15,
**dadurch gekennzeichnet, dass** die Anschlussbaugruppe (5) als Abschlussdeckel (18) des elektronisch kommutierten Elektromotors (1) ausgebildet ist, sowie mindestens eine elektrische Anschlussleitung (19) und mindestens ein Steckverbindungsmittel (20) für die elektrische Kontaktierung der Statorwicklung (6) mit der elektrischen Anschlussleitung (19) aufweist und eine fluiddichte Abdichtung des Motorgehäuses (4) bewirkt.
